(19) **Europäisches Patentamt / European Patent Office / Office européen des brevets**

(11) **EP 2 583 484 B1**

(12) **FASCICULE DE BREVET EUROPEEN**

(45) Date de publication et mention de la délivrance du brevet:
**09.04.2014 Bulletin 2014/15**

(21) Numéro de dépôt: **11728647.6**

(22) Date de dépôt: **31.05.2011**

(51) Int Cl.:
**H04W 12/12** *(2009.01)* **H04B 17/00** *(2006.01)*
**H04K 3/00** *(2006.01)*

(86) Numéro de dépôt international:
**PCT/FR2011/051252**

(87) Numéro de publication internationale:
**WO 2011/157920 (22.12.2011 Gazette 2011/51)**

(54) **Procédé de sécurisation d'une communication sans fil, dispositif récepteur et système de communication mettant en oeuvre ce procédé**

Verfahren zur Sicherung einer drahtlosen Kommunikation, Empfängervorrichtung und Kommunikationssystem mit diesem Verfahren

Method of securing a wireless communication, receiver device and communication system implementing this method

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.06.2010 FR 1054723**

(43) Date de publication de la demande:
**24.04.2013 Bulletin 2013/17**

(73) Titulaire: **Commissariat à l'Énergie Atomique et aux Énergies Alternatives
75015 Paris (FR)**

(72) Inventeurs:
• **BEN HAMIDA, Sana**
  **F-38000 Grenoble (FR)**

• **PIERROT, Jean-Benoît**
  **F-38120 Saint-Egrève (FR)**
• **SAVRY, Olivier**
  **F-38360 Sassenage (FR)**
• **THEVENON, Pierre-Henri**
  **F-43210 Bas-en-Basset (FR)**
• **CASTELLUCCIA, Claude**
  **F-38190 Bernin (FR)**

(74) Mandataire: **Bonnet, Michel et al
Cabinet Bonnet
93, Rue Réaumur - Boîte 10
75002 Paris (FR)**

(56) Documents cités:
**WO-A2-2009/033001 US-A1- 2006 255 909**

Printed by Jouve, 75001 PARIS (FR)

**Description**

La présente invention concerne un procédé de sécurisation d'une communication sans fil. Elle concerne également un dispositif récepteur et un système sécurisé de communication mettant en oeuvre ce procédé.

Par « communication sans fil », on entend une communication entre un émetteur A et un récepteur B établie sans recours à un quelconque lien matériel entre A et B, que ce lien matériel soit un fil ou câble électrique pour la transmission d'un courant électrique, une fibre optique pour la transmission de signaux optiques, ou un guide d'onde matériel quelconque apte à guider des ondes électromagnétiques ou acoustiques.

Selon cette définition, les communications généralement qualifiées de « sans contact », c'est-à-dire sans contact électrique, de type RFID, NFC ou autres, font partie de la famille des communications sans fil.

La mise en oeuvre de l'invention peut donc être envisagée dans les réseaux de télécommunication sans fil classiques (par exemple, communication entre un terminal mobile et une antenne relais), les réseaux sans fil de type ad hoc (par exemple, communication spontanée entre deux mobiles), les réseaux de capteurs (par exemple, transmission sans fil d'une information générée par un capteur vers un autre point du réseau), les systèmes sans contact (par exemple, les systèmes RFID en champ proche ou lointain, NFC ou autres), les réseaux véhiculaires (par exemple, communication sans contact de commande d'ouverture d'une voiture à distance) ou toute autre application de communication sans fil.

On considère par ailleurs qu'au cours d'une communication sans fil entre un émetteur A et un récepteur B, un signal reçu par B peut, selon l'application, résulter :

1- d'un signal engendré et émis par A (télécommunication sans fil classique entre A et B par exemple),
2- d'une onde émise par B et réfléchie par A (communication de type RFID en champ lointain par exemple), ou
3- d'un couplage inductif entre A et B, par exemple dans le cas où A est placé dans un voisinage de B générateur d'un champ électromagnétique (communication de type sans contact en champ proche par exemple).

Le signal émis par l'émetteur A est donc selon le cas, un signal engendré par A (cas 1), un signal réfléchi par A (cas 2) ou un signal « induit » correspondant à l'influence de A sur le champ magnétique vu par le récepteur B (cas 3).

Ce type de communication est devenu très répandu mais est particulièrement vulnérable à des attaques, notamment des attaques relais également qualifiées dans certains cas d'attaques « trou de ver » (de l'Anglais « wormhole attack »). En effet, les données acheminées dans les systèmes de communication sans fil peuvent être menacées par des interceptions malicieuses ayant pour but de déséquilibrer le fonctionnement normal de la communication. Ces attaques simples à réaliser mais difficiles à contrer altèrent la confiance des utilisateurs dans ce type de communication.

L'attaque relais consiste plus précisément à réaliser, à l'aide d'au moins un dispositif relais a priori non autorisé, une liaison sans fil entre un émetteur et un récepteur pour qu'ils communiquent même s'ils ne sont pas à portée de communication l'un de l'autre. Son but est de réussir à obtenir des autorisations d'accès à des applications en créant un tunnel entre l'émetteur et le récepteur, ce tunnel interceptant le flux de données généralement confidentielles échangé sous forme de signaux se propageant librement dans l'air ou sous forme de variations commandées d'un champ électromagnétique entre l'émetteur et le récepteur. Dans les réseaux ad hoc, la création de ce tunnel pirate entre l'émetteur et le récepteur engendre en outre des informations fausses concernant la table de routage de la communication en cours, la localisation, les algorithmes de consensus, etc.

L'attaque relais est déjà en soi potentiellement dangereuse, mais elle est en outre capable d'introduire d'autres attaques plus sophistiquées comme l'attaque de « l'homme du milieu » (de l'Anglais « man in the middle attack »), l'attaque par « déni de service » (de l'Anglais « denial of service attack ») ou encore l'attaque par « rejeu » (de l'Anglais « replay attack »).

De nombreuses solutions de sécurisation ont été imaginées pour contrer cette attaque, mais elles sont toujours trop complexes et/ou trop spécifiques à certaines applications et/ou insatisfaisantes en terme d'efficacité.

Par exemple, dans les applications de réseaux coopératifs tels que les réseaux ad hoc et les réseaux de capteurs, les approches suivantes peuvent être proposées :

- la mesure d'un temps de retard en fonction du temps d'émission et du temps de réception (y compris le temps de traitement) de paquets de données, mais cette solution complexe nécessite l'utilisation d'horloges synchronisées entre l'émetteur et le récepteur pour réduire les erreurs de décisions,
- la vérification de la position géographique du dispositif émetteur pour savoir s'il est effectivement à portée de communication du dispositif récepteur, mais cette solution également complexe nécessite l'utilisation d'un système de positionnement tel qu'un GPS (de l'Anglais « Global Position System »),
- l'estimation d'un temps de vol par mesure du temps, par le dispositif émetteur, entre l'envoi d'un message et la réception de son acquittement lorsque le protocole de communication le prévoit, mais cette solution imprécise ne tient pas compte du temps de traitement du message par le récepteur avant l'envoi de l'acquittement alors que ce temps de traitement est loin d'être négligeable,

- l'estimation de la distance séparant l'émetteur du récepteur par mesure de la puissance du signal reçu, mais cette solution n'est envisageable que pour des réseaux d'émetteurs/récepteurs statiques,
- l'utilisation d'antennes directionnelles, mais cette solution très spécifique à certaines applications ajoute une certaine complexité structurelle,
- d'autres solutions encore plus spécifiques imposant un environnement de communication entre dispositifs statiques.

Par exemple encore, dans les applications de communication sans contact de type carte RFID et capteur, d'autres approches peuvent être proposées en plus des précédentes :

- la localisation de la carte RFID par usage de la technologie UWB qui permet de mesurer des distances avec une résolution inférieure à 30 cm, mais cette solution ajoute un coût et une complexité non négligeables pour une précision qui reste à démontrer,
- la désactivation temporaire de la carte RFID par le porteur à l'aide de dispositifs de type cage de Faraday ou de moyens de séparation de la puce et de l'antenne de la carte, mais ces solutions ajoutent de la complexité et nécessitent une intervention de l'utilisateur.

D'autres solutions sont encore proposées, souvent pour des applications très spécifiques, comme par exemple celle décrite dans la demande de brevet internationale publiée sous le numéro WO 2004/114227. Dans ce document, une solution simple techniquement est imaginée grâce à la génération et l'utilisation, dans le processus de communication entre l'émetteur et le récepteur, d'un signal sonore audible par un utilisateur. Mais là encore, le champ des applications envisageables est très étroit, par exemple la commande d'ouverture d'une voiture à distance, sans compter qu'en plus cette solution sollicite également l'utilisateur.

La demande de brevet publiée sous le numéro US 2006/0255909 A1 décrit un procédé de sécurisation d'une communication sans fil entre un dispositif émetteur et un dispositif récepteur, comportant la réception d'un signal par le dispositif récepteur. Ce signal est par exemple un message comportant des données d'authentification ou un signal « naturel » de bruit HF dont le récepteur surveille régulièrement le niveau. Un test de bruit est réalisé par le récepteur. Ce test a pour but de détecter des interférences ou des changements dans le bruit HF de l'environnement naturel du récepteur. Il est basé sur une comparaison d'au moins un paramètre de bruit extrait du signal reçu avec un paramètre de bruit de référence caractéristique d'un bruit HF de référence du signal naturel.

Il peut être souhaité de prévoir un procédé de sécurisation qui permette de s'affranchir d'au moins une partie des problèmes et contraintes précités.

L'invention a donc pour objet un procédé de sécurisation d'une communication sans fil entre un dispositif émetteur et un dispositif récepteur, comportant les étapes suivantes :

- réception d'un signal par le dispositif récepteur,
- extraction par le dispositif récepteur d'au moins un paramètre de bruit de ce signal reçu,
- comparaison du paramètre de bruit extrait avec au moins un paramètre de bruit de référence correspondant stocké en mémoire dans le dispositif récepteur,
- décision sur la présence ou l'absence d'un dispositif relais entre le dispositif émetteur et le dispositif récepteur en fonction du résultat de cette comparaison.

Avantageusement, un procédé de sécurisation d'une communication sans fil selon l'invention comporte en outre une calibration préalable du dispositif récepteur au cours de laquelle :

- le dispositif récepteur reçoit un signal résultant d'une communication directe avec le dispositif émetteur sans intervention de dispositif relais,
- le dispositif récepteur extrait au moins un paramètre de bruit du signal reçu, et
- le dispositif récepteur stocke en mémoire ce paramètre de bruit en tant que paramètre de bruit de référence caractéristique d'une communication directe sans dispositif relais entre le dispositif émetteur et le dispositif récepteur.

On montre en effet que l'intervention d'au moins un dispositif relais dans une communication sans fil a une incidence sur le bruit du signal reçu par le dispositif récepteur, notamment lorsque le dispositif relais se contente d'intercepter et retransmettre un signal avec ou sans amplification. Ainsi, puisqu'il est simple pour le récepteur d'extraire des paramètres de bruit à partir du signal reçu, notamment lors d'une étape de calibration préalable, il est astucieux d'utiliser ces paramètres pour la détection d'un ou plusieurs dispositifs relais non autorisés. En outre, cette solution est transparente pour l'utilisateur. On notera enfin qu'elle offre la possibilité de détecter une attaque relais en se basant sur des caractéristiques de la couche physique (au sens des couches du modèle international OSI d'interconnexion de systèmes ouverts) que sont les paramètres de bruit estimés au niveau du récepteur.

De façon optionnelle, un procédé de sécurisation d'une communication sans fil selon l'invention peut comporter préalablement les étapes suivantes :

- génération, par le dispositif émetteur, d'un bruit prédéterminé à partir d'au moins un paramètre de bruit prédéterminé connu du dispositif émetteur et du dispositif récepteur, et
- émission d'un signal comportant le bruit prédéterminé,

et la comparaison, par le dispositif récepteur, du paramètre de bruit extrait avec le paramètre de bruit de référence peut comporter la prise en compte du paramètre de bruit prédéterminé connu du dispositif émetteur et du dispositif récepteur.

De façon optionnelle également, le paramètre de bruit extrait et le paramètre de bruit de référence comportent chacun un paramètre d'estimation de variance de bruit.

De façon optionnelle également, la décision sur la présence ou l'absence d'un dispositif relais comporte une étape de test basée sur le test d'une hypothèse de présence ou d'absence de dispositif relais confrontée à des seuils de rejet de cette hypothèse calculés en fonction du test de Fisher ou de probabilités prédéterminées de faux positifs et/ou négatifs visés.

L'invention a également pour objet un dispositif récepteur de signaux engendrés par une communication sans fil entre un dispositif émetteur prédéterminé et ce dispositif récepteur, comportant :

- des moyens de calibration par réception d'un signal résultant d'une communication directe avec le dispositif émetteur sans intervention de dispositif relais et par extraction d'au moins un paramètre de bruit du signal reçu en tant que paramètre de bruit de référence caractéristique d'une communication directe sans dispositif relais entre le dispositif émetteur et le dispositif récepteur,
- des moyens de stockage de ce paramètre de bruit de référence,
- des moyens d'extraction d'au moins un paramètre de bruit d'un signal reçu,
- des moyens de comparaison du paramètre de bruit extrait avec le paramètre de bruit de référence,
- des moyens de détection de la présence ou de l'absence d'un dispositif relais entre le dispositif émetteur prédéterminé et le dispositif récepteur en fonction du résultat de cette comparaison.

De façon optionnelle, un dispositif récepteur selon l'invention peut comporter en outre des moyens de stockage d'au moins un paramètre de bruit prédéterminé connu également du dispositif émetteur prédéterminé et les moyens de comparaison peuvent être conçus pour prendre en compte ce paramètre de bruit prédéterminé. De façon optionnelle également, les moyens d'extraction comportent :

- un filtre coupe-bande destiné à être appliqué au signal reçu pour la fourniture d'un signal de bruit filtré et dont les fréquences de coupure sont définies en fonction d'une bande passante utile présupposée du signal reçu, et
- des moyens d'estimation d'au moins un paramètre statistique, spectral et/ou d'amplitude du signal de bruit filtré.

L'invention a également pour objet un système sécurisé de communication sans fil comportant au moins un dispositif récepteur et au moins un dispositif émetteur, dans lequel chaque dispositif récepteur est un dispositif tel que défini précédemment.

De façon optionnelle, chaque dispositif émetteur, respectivement récepteur, est également un dispositif récepteur, respectivement émetteur.

L'invention sera mieux comprise à l'aide de la description qui va suivre, donnée uniquement à titre d'exemple et faite en se référant aux dessins annexés dans lesquels :

- les figures 1 A et 1 B représentent schématiquement l'établissement d'une communication entre deux dispositifs de communication sans fil, sans et avec dispositif relais entre eux,
- les figures 2A, 2B, 2C et 2D illustrent plusieurs scénarios d'attaques relais possibles entre les deux dispositifs de communication des figures 1 A et 1 B,
- la figure 3 est un diagramme illustrant l'incidence de la présence ou non d'un dispositif relais sur le bruit reçu par un dispositif de communication,
- la figure 4 représente schématiquement la structure générale d'un dispositif de réception selon un mode de réalisation de l'invention,
- la figure 5 illustre les étapes successives d'une phase de calibration d'un procédé de sécurisation selon un mode de réalisation de l'invention, et
- la figure 6 illustre les étapes successives d'une phase de communication d'un procédé de sécurisation selon un mode de réalisation de l'invention.

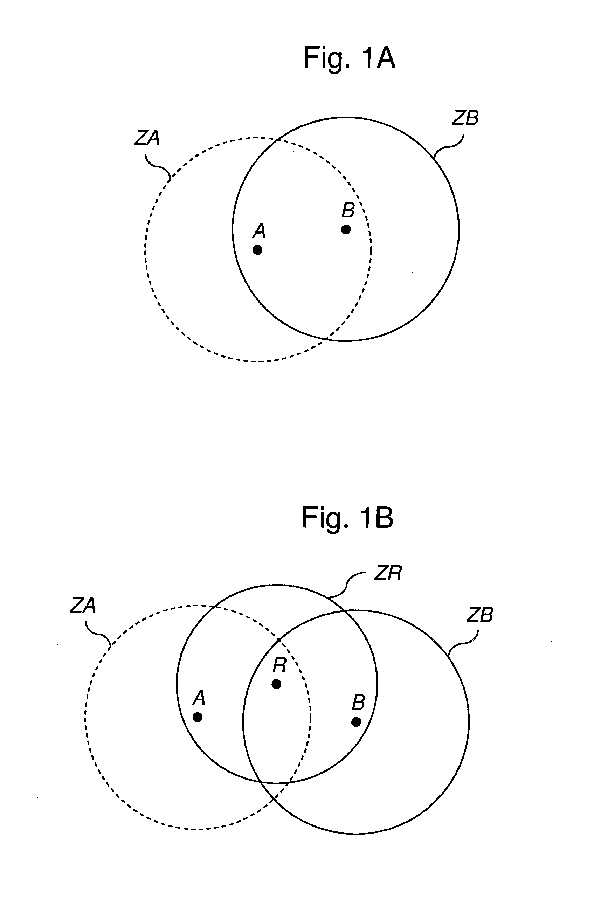

Le système de communication sans fil représenté sur la figure 1 A comporte un dispositif émetteur A et un dispositif récepteur B.

Selon le type de communication envisagé (cas 1, 2 ou 3 mentionné ci-avant), le dispositif récepteur B peut recevoir des signaux susceptibles d'être engendrés par A (cas 1), réfléchis par A (cas 2) ou simplement résultant d'une simple présence de A dans le champ magnétique de B (cas 3), lorsque A est disposé à l'intérieur d'une zone de réception ZB de B située dans un voisinage de B et contenant B. Au-delà de cette zone ZB, le dispositif A est hors de portée de B et une communication sans contact ne peut pas être établie entre eux. Ainsi, dans la configuration de communication directe de la figure 1A, A est situé à l'intérieur de cette zone de réception ZB.

On notera que dans d'autres applications de communication sans fil dans lesquelles les deux dispositifs A et B sont à la fois émetteurs et récepteurs, A présente également une zone de réception ZA, représentée en pointillés sur la figure 1 A, dans laquelle B doit également se trouver pour qu'une communication directe puisse également être établie de B vers A. En situation de communication directe, A et B sont alors tous deux situés à l'intérieur de l'intersection des zones de réception ZA et ZB.

La figure 1 B illustre une configuration du système de communication dans laquelle les dispositifs A et B ne peuvent pas communiquer directement puisque A est hors de portée de B. Mais dans cette configuration, un dispositif relais R est disposé entre A et B de telle sorte qu'une communication indirecte peut quand même avoir lieu entre A et B. Plus précisément, le dispositif relais R est disposé à l'intérieur de la zone de réception ZB et il peut lui-même recevoir des signaux susceptibles d'être émis par A, réfléchis par A ou simplement engendrés par une simple présence de A, lorsque A est disposé à l'intérieur d'une zone de réception ZR de R située dans un voisinage de R et contenant R.

Ainsi, dans un premier type de communication indirecte possible (cas 1 susmentionné), un signal émis par le dispositif A peut être reçu par le dispositif relais R puisque A est situé dans la zone de réception ZR de R, puis retransmis par ce dernier pour être reçu par le dispositif B puisque R est situé dans la zone de réception ZB de B.

Dans un deuxième type de communication indirecte possible (cas 2 susmentionné), un signal émis par le dispositif B peut être reçu par le dispositif relais R lorsque B est situé dans la zone de réception ZR de R, puis retransmis par ce dernier pour être réfléchi par le dispositif A et reçu par R puisque A est situé dans la zone de réception ZR de R, puis retransmis par ce dernier pour être reçu par le dispositif B puisque R est situé dans la zone de réception ZB de B.

Enfin, dans un troisième type de communication indirecte possible (cas 3), les caractéristiques (puissance, modulation, éventuellement fréquence porteuse lorsque celle-ci n'est pas déjà connue) d'un champ magnétique engendré par le dispositif B peuvent être perçues par le dispositif relais R lorsque B est situé dans la zone de réception ZR de R, puis reproduites par le relais R pour le dispositif A. Le dispositif A étant situé dans la zone de réception ZR de R, le signal émis par A, correspondant à l'influence de A dans le champ du relais R, peut être retransmis vers B de la même manière (couplage inductif) dans la mesure où le relais R est situé dans la zone de réception ZB de B.

On notera que dans d'autres applications de communication sans fil dans lesquelles les deux dispositifs A et B sont à la fois émetteurs et récepteurs, A présente également une zone de réception ZA, représentée en pointillés sur la figure 1 B, dans laquelle R doit également se trouver pour qu'une communication indirecte puisse être également établie de B vers A via le relais R. En situation de communication indirecte, le dispositif relais R est alors situé à l'intérieur de l'intersection des zones de réception ZA et ZB.

Lorsque les dispositifs A et B sont encore plus éloignés, notamment lorsque leurs zones de réception n'ont pas d'intersection, plusieurs dispositifs relais peuvent être nécessaires pour établir une communication indirecte entre eux.

Bien que, parfois, un ou plusieurs dispositifs relais autorisés et authentifiables puissent être envisagés ou tolérés entre les dispositifs communicants A et B, dans l'exemple précité d'une attaque relais un dispositif relais peut aussi être utilisé de façon frauduleuse pour intercepter les données échangées entre A et B, identifier l'un auprès de l'autre et/ou faire croire à ces derniers qu'ils sont à portée de communication directe l'un de l'autre. Il est donc souhaitable de pouvoir facilement et rapidement détecter la présence d'un dispositif relais. Dans le cas où plusieurs dispositifs relais autorisés sont utilisés, l'émetteur initial plus l'ensemble des relais autorisés peuvent être vus comme un unique émetteur au sens de la présente invention.

En l'absence de dispositif relais R, si l'on note X un signal émis par A selon l'un des 3 cas susmentionnés, si l'on note en outre $H_{AB}$ la réponse du canal de transmission entre A et B et $Y_{AB}$ le signal directement reçu par B, on obtient alors la relation suivante :

$$Y_{AB} = H_{AB}.X + N_B, \tag{1}$$

où $N_B$ est par exemple un bruit blanc gaussien reçu et pouvant être mesuré par le dispositif B.

Plusieurs types de dispositifs relais, pour plusieurs types d'attaques relais, sont envisageables.

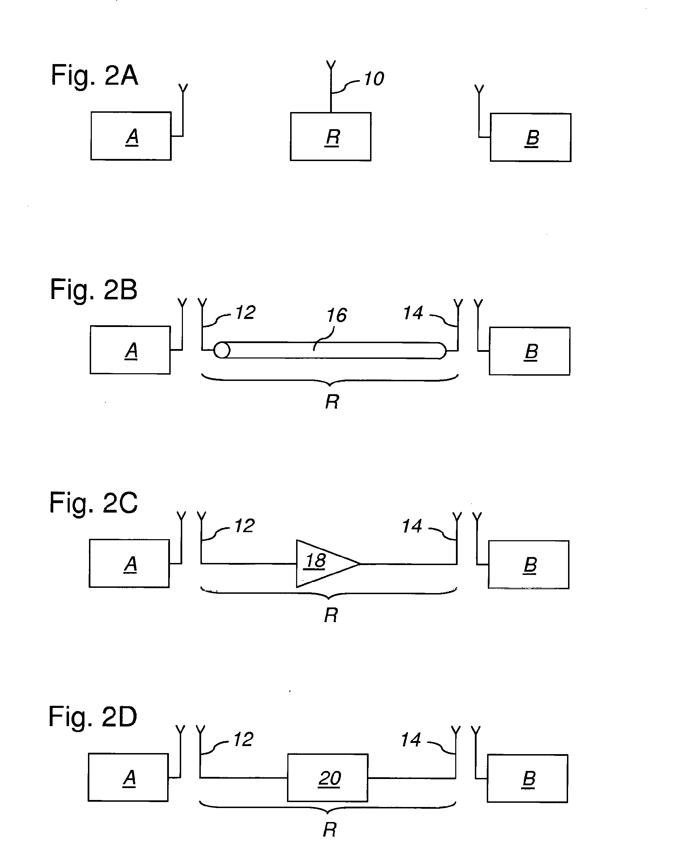

Selon une première variante du scénario le plus simple de retransmission sans amplification illustré sur la figure 2A, le dispositif relais R disposé entre le dispositif émetteur A et le dispositif récepteur B comporte une antenne réceptrice et émettrice 10. Grâce à cette antenne 10, il peut recevoir un signal émis par le dispositif A et le retransmettre sans amplification vers B. Réciproquement, dans une application de communication sans fil bidirectionnelle, il peut recevoir un signal émis par le dispositif B et le retransmettre directement sans amplification vers A.

Selon une seconde variante du scénario le plus simple de retransmission sans amplification illustré sur la figure 2B, le dispositif relais R comporte une première antenne émettrice et réceptrice 12, une seconde antenne émettrice et réceptrice 14 différente de l'antenne 12 et une liaison 16 de transmission de données entre les deux antennes 12 et 14. La liaison de transmission 16 est par exemple un câble coaxial électrique classique, mais d'une façon plus générale, toute liaison de transmission de données avec ou sans fil est envisageable. Ce type de dispositif relais peut être utilisé lorsque les dispositifs A et B sont trop éloignés pour n'utiliser qu'un seul dispositif relais R selon la figure 2A. Le dispositif relais R peut ainsi recevoir un signal émis par le dispositif A, grâce à l'antenne 12 et le retransmettre sans amplification vers B grâce à l'antenne 14 via le câble coaxial 16. Réciproquement, il peut recevoir un signal émis par le dispositif B grâce à l'antenne 14 et le retransmettre sans amplification vers A grâce à l'antenne 12 via le câble coaxial 16.

En pratique, les antennes 10, 12, 14 précitées peuvent être des antennes de type MIMO (de l'Anglais « Multiple Input Multiple Output »), SISO (de l'Anglais « Single Input Single Output »), SIMO (de l'Anglais « Single Input Multiple Output ») ou MISO (de l'Anglais « Multiple Input Single Output »).

Conformément à ce scénario de retransmission sans amplification par le dispositif relais R, le signal indirectement reçu par B, noté $Y_{ARB}$, devient :

$$
\begin{aligned}
Y_{ARB} &= H_{RB}.(H_{AR}.X + N_R) + N_B \\
&= H_{RB}.H_{AR}.X + H_{RB}.N_R + N_B, \quad\quad\quad\quad (2)
\end{aligned}
$$

où $N_R$ est par exemple un bruit blanc gaussien reçu par le dispositif relais R, $H_{AR}$ la réponse du canal de transmission entre A et R et $H_{RB}$ la réponse du canal de transmission entre R et B.

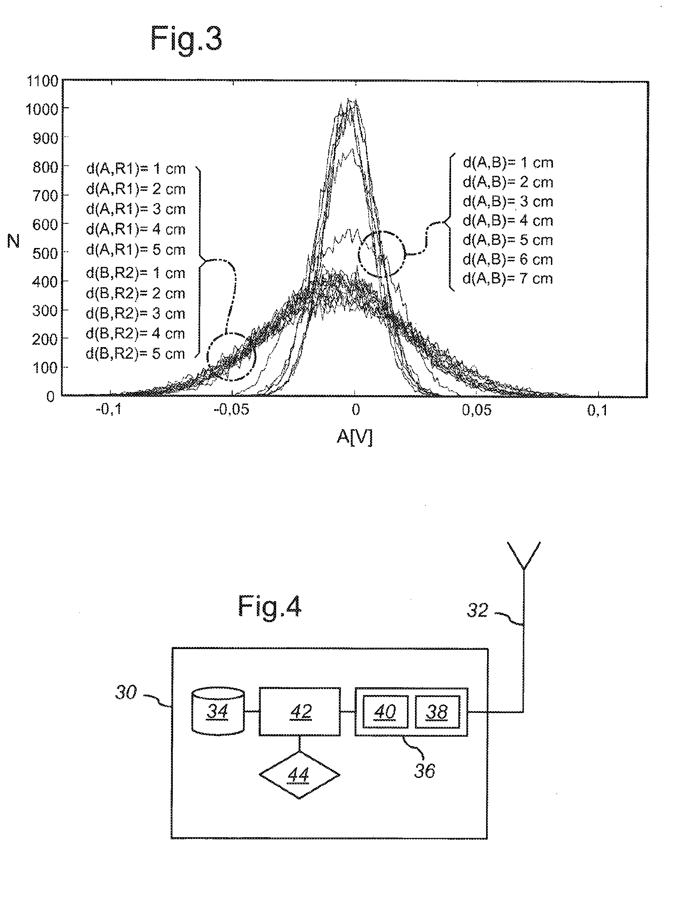

Les équations (1) et (2) montrent une différence entre les quantités de bruit reçues par le dispositif B avec ou sans dispositif relais R. On remarque en particulier qu'en réception directe, conformément à l'équation (1), le bruit, séparable du signal utile, reçu par B vaut $N_B$, alors qu'en réception indirecte et selon le scénario de retransmission sans amplification, conformément à l'équation (2), le bruit, séparable du signal utile, reçu par B vaut $H_{RB}.N_R + N_B$. Cette propriété est avantageusement exploitée par l'invention, comme cela sera détaillé en référence aux figures 4 à 6.

Selon un scénario un peu plus complexe que le précédent de retransmission avec amplification illustré sur la figure 2C, le dispositif relais R comporte une première antenne émettrice et réceptrice 12, une seconde antenne émettrice et réceptrice 14 différente de l'antenne 12 et une liaison de transmission de signal entre les deux antennes 12 et 14 comportant un amplificateur 18. Le dispositif relais R peut ainsi recevoir un signal émis par le dispositif A, grâce à l'antenne 12 et le retransmettre directement avec amplification vers B grâce à l'antenne 14. Réciproquement, il peut recevoir un signal émis par le dispositif B grâce à l'antenne 14 et le retransmettre avec amplification vers A grâce à l'antenne 12.

Conformément à ce scénario de retransmission avec amplification par le dispositif relais R, le signal $Y_{ARB}$ indirectement reçu par B devient :

$$
\begin{aligned}
Y_{ARB} &= G.H_{RB}.(H_{AR}.X + N_R) + N_B \\
&= G.H_{RB}.H_{AR}.X + G.H_{RB}.N_R + N_B, \quad\quad\quad\quad (3)
\end{aligned}
$$

où G est le gain de l'amplificateur 18.

Les équations (1) et (3) montrent de nouveau une différence entre les quantités de bruit reçues par le dispositif B avec ou sans dispositif relais R. On remarque en particulier qu'en réception directe, conformément à l'équation (1), le bruit, séparable du signal utile, reçu par B vaut $N_B$, alors qu'en réception indirecte et selon le scénario de retransmission avec amplification, conformément à l'équation (3), le bruit, séparable du signal utile, reçu par B vaut $G.H_{RB}.N_R + N_B$. Cette propriété est avantageusement exploitée par l'invention, comme cela sera détaillé en référence aux figures 4 à 6.

Selon un autre scénario de retransmission avec décodage et recodage illustré sur la figure 2D, le dispositif relais R comporte une première antenne émettrice et réceptrice 12, une seconde antenne émettrice et réceptrice 14 différente de l'antenne 12 et une liaison de transmission de données entre les deux antennes 12 et 14 comportant un codeur/décodeur 20. Le dispositif relais R peut ainsi recevoir un signal émis par le dispositif A, grâce à l'antenne 12, le décoder et le recoder grâce au codeur/décodeur 20 et le retransmettre vers B grâce à l'antenne 14. Réciproquement, il peut recevoir un signal émis par le dispositif B grâce à l'antenne 14, le décoder et le recoder grâce au codeur/décodeur 20 et le retransmettre vers A grâce à l'antenne 12.

Conformément à ce scénario de retransmission avec décodage et recodage par le dispositif relais R, le signal $Y_{ARB}$ indirectement reçu par B devient :

$$Y_{ARB} = H_{RB}.X' + N_B, \tag{4}$$

où X' est le signal obtenu par le dispositif relais R après décodage et recodage.

Les équations (1) et (4) montrent cette fois-ci que les quantités de bruit reçues par le dispositif B avec ou sans dispositif relais R sont a priori les mêmes.

Pour détecter ce type de dispositif relais à décodage et recodage, il peut ainsi être avantageux d'ajouter volontairement un bruit $N_C$ prédéterminé à l'émission, ce bruit prédéterminé et/ou des paramètres permettant d'engendrer ce bruit prédéterminé étant connus du dispositif émetteur et du dispositif récepteur mais pas du dispositif relais R.

L'équation (1) devient alors :

$$Y_{AB} = H_{AB}.X + N_B + N_C, \tag{5}$$

Les équations (5) et (4) montrent de nouveau une différence entre les quantités de bruit reçues par le dispositif B avec ou sans dispositif relais R. On remarque en particulier qu'en réception directe, conformément à l'équation (5), le bruit, séparable du signal utile, reçu par B vaut $N_B + N_C$, alors qu'en réception indirecte et selon le scénario de retransmission avec décodage et recodage, conformément à l'équation (4), le bruit, séparable du signal utile, reçu par B vaut $N_B$. Cette propriété est avantageusement exploitée par un mode de réalisation de l'invention, comme cela sera détaillé en référence aux figures 4 à 6.

Le diagramme illustré sur la figure 3 résulte de mesures expérimentales prises sur un dispositif récepteur, par exemple le dispositif B, pour déterminer la distribution du bruit (mesurée en Volts sur un oscilloscope) sur un certain nombre d'échantillons, selon différentes configurations de distances d(A,B) entre les dispositifs communicants A et B sans relais R et selon différentes configurations de distances d(A,R1) entre A et R1 et d(B,R2) entre R2 et B avec relais R, où R1 désigne une antenne de R disposée à proximité de l'émetteur A et R2 une antenne de R disposée à proximité du récepteur B (selon l'un des premier et deuxième scénarios présentés précédemment).

Les conditions expérimentales sont les suivantes : la communication est de type sans contact en champ proche, les signaux échangés étant conformes à la norme ISO 14443-A. Le dispositif récepteur B est un lecteur sans contact classique et le dispositif émetteur A est un transpondeur de type carte sans contact classique. Le signal reçu par le récepteur B et modulé par l'émetteur A est centré sur la fréquence 13,56 MHz (porteuse du lecteur/récepteur) et présente une bande passante d'environ 2 MHz (modulation du transpondeur/émetteur). Pour extraire le bruit reçu, on applique par exemple un filtrage coupe-bande ayant pour fréquences de coupures 9 MHz et 18 Mhz, de sorte que le signal reçu par B filtré peut être considéré comme ne comportant que des fréquences liées au bruit.

En configuration de communication directe sans relais entre A et B, et quelle que soit la distance d(A,B) entre A et B de 1 à 7 cm, on remarque que la distribution du bruit est très dense au voisinage de 0 et reste assez constante. En configuration de communication indirecte avec relais entre A et B, quelle que soit la distance d(A,R1) entre A et R1 de 1 à 5 cm et quelle que soit la distance d(B,R2) entre B et R2 de 1 à 5 cm, on remarque que la distribution du bruit est nettement moins dense au voisinage de 0 et reste assez constante. Il apparaît donc que les mesures établissent que les propriétés statistiques, spectrales et/ou d'amplitude du signal de bruit filtré diffèrent selon que la communication sans fil entre A et B est avec ou sans relais fonctionnant selon l'un des premier et deuxième scénarios présentés précédemment. Ces mesures confirment les résultats attendus des équations (1) à (3).

Un dispositif récepteur 30 selon l'invention comporte donc avantageusement, comme illustré sur la figure 4 :

- une antenne réceptrice 32 de signaux,
- une mémoire 34 pour le stockage d'au moins un paramètre de bruit de référence caractéristique d'une communication directe sans dispositif relais entre un dispositif émetteur prédéterminé et le dispositif récepteur 30,
- des moyens 36 d'extraction d'au moins un paramètre de bruit d'un signal reçu et transmis par l'antenne 32, ces moyens d'extraction 36 comportant par exemple un filtre coupe-bande 38 et des moyens 40 d'estimation d'au moins un paramètre statistique, spectral et/ou d'amplitude du signal de bruit filtré,
- des moyens 42 de comparaison du paramètre de bruit extrait avec le paramètre de bruit de référence, et
- des moyens 44 de détection de la présence ou de l'absence d'un dispositif relais entre le dispositif émetteur prédéterminé et le dispositif récepteur 30 en fonction du résultat de cette comparaison.

En pratique, les moyens d'estimation 40, de comparaison 42 et de détection 44 peuvent être implémentés sous forme d'au moins une puce électronique à microprocesseur et/ou programmés sous la forme d'instructions d'au moins un programme d'ordinateur stocké dans le dispositif récepteur 30.

De façon optionnelle, pour pouvoir détecter la présence d'un dispositif relais à décodage et recodage des signaux retransmis, la mémoire 34 peut en outre stocker au moins un paramètre de bruit prédéterminé connu également du dispositif émetteur prédéterminé. Dans ce cas, les moyens de comparaison 42 sont conçus pour prendre en compte ce paramètre de bruit prédéterminé.

Dans un mode de réalisation tel que celui illustré par les figures 1 A ou 1 B, où seul le dispositif B est obligatoirement récepteur, ce dernier peut être de structure générale conforme à celle du dispositif récepteur 30 de la figure 4. En particulier, on notera que dans une application de communication sans contact en champ proche à carte passive et un lecteur de carte, il suffit que le lecteur de carte, à la fois émetteur (par génération d'un champ magnétique local) et récepteur (par détection des modulations engendrées sur ce champ magnétique par l'identifiant de la carte), soit conforme au dispositif de réception 30 avec adaptation de l'antenne 32 à cette application spécifique pour que l'invention puisse être mise en oeuvre.

Dans d'autres modes de réalisation possibles, où chaque dispositif communicant sans fil A ou B du système de communication est à la fois émetteur et récepteur, les dispositifs A et B peuvent chacun être de structure générale conforme à celle du dispositif récepteur 30 de la figure 4.

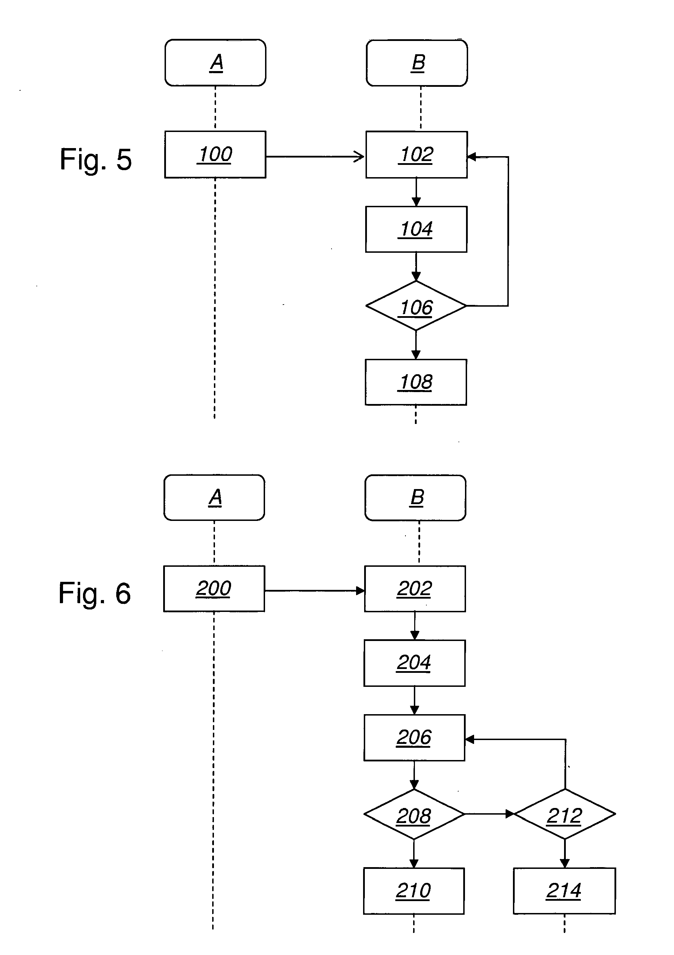

Le fonctionnement d'un dispositif récepteur tel que celui de la figure 4 va maintenant être détaillé en référence aux figures 5 et 6.

Pendant une phase de calibration du dispositif récepteur B illustrée sur la figure 5, au cours de laquelle on s'assure qu'une communication sans dispositif relais peut être assurée entre les dispositifs A et B, le dispositif émetteur A envoie tout d'abord un signal utile S au dispositif B (étape 100).

Ce signal S est reçu par le dispositif B au cours d'une étape 102.

Ensuite, au cours d'une étape 104 d'analyse, le dispositif récepteur B extrait des paramètres de bruit. Par exemple, il filtre le signal reçu, notamment à l'aide du filtre coupe-bande 38 si un tel filtre est implémenté, pour fournir un signal de bruit et en extrait de façon classique des paramètres statistiques, spectraux et/ou d'amplitude à l'aide des moyens 40. Ces moyens 40 sont par exemple des moyens logiciels classiques de caractérisation d'un signal de bruit. Il existe de nombreuses façons connues de caractériser un bruit à l'aide de méthodes statistiques, de caractérisations de réponses fréquentielles ou temporelles, pour identifier un bruit et pouvoir ensuite le comparer à d'autres bruits. On peut par exemple citer les méthodes de corrélation de signaux, d'analyse de l'amplitude d'un signal par rapport à un seuil fixe, d'estimation d'un rapport signal sur bruit, d'analyse spectrale ou statistique (variance, moyenne, ...) des signaux. On notera également qu'il est possible d'extraire des paramètres de bruit d'un signal bruité sans nécessairement filtrer au préalable le signal bruité, ce qui peut sensiblement simplifier l'implémentation des moyens d'extraction 36.

Le calcul des paramètres de bruit est par exemple répété N fois, N pouvant être élevé, pour améliorer la caractérisation du signal de bruit de référence, c'est-à-dire le signal de bruit normalement reçu par le dispositif B en l'absence de dispositif relais R. Cette répétition est assurée par l'exécution d'une étape de test 106 qui impose au dispositif B de revenir à l'étape 102 tant que le nombre N d'itérations n'est pas atteint.

Enfin, lorsque les N caractérisations de bruit de référence sont réalisées, les paramètres résultants sont stockés dans la mémoire 34 au cours d'une étape 108. Il est ainsi possible de construire une base de bruits collectant différentes mesures de bruit qui peut ensuite être utilisée pour la détection de dispositifs relais. On notera d'ailleurs que ces différentes caractérisations peuvent être faites dans différentes conditions, formant ainsi une base de données contenant plusieurs estimations de bruit. Dans une application de communication sans contact, ces différentes conditions peuvent par exemple être différents cas autorisés dans lesquels plusieurs transpondeurs sont présents dans la zone de réception du dispositif lecteur/récepteur.

Par réciprocité et de façon optionnelle, dans une application de communication bidirectionnelle, le dispositif A pourrait lui aussi, en tant que récepteur potentiel vis-à-vis de B, exécuter les étapes de cette phase de calibration à l'aide de B sans dispositif relais.

La phase de calibration précédemment décrite doit être réalisée pendant une communication sans relais entre les dispositifs A et B. Elle peut par exemple être exécutée lorsqu'il n'y a pas d'échange de trames entre les deux dispositifs A et B, par exemple avant le déploiement du réseau dans une application de télécommunication sans fil classique.

Une phase de communication, avec ou sans dispositif relais, est illustrée sur la figure 6. La communication est établie entre les dispositifs communicants A et B, ces deux dispositifs supposant a priori que l'échange est direct sans retransmission par relais.

Au cours d'une première étape 200, le dispositif A envoie un signal utile au dispositif B. De façon optionnelle et pour contrer des attaques relais à retransmission avec décodage et recodage, au cours de cette étape 200 le dispositif A engendre un signal de bruit prédéterminé à partir d'au moins un paramètre de bruit prédéterminé connu également du dispositif B et ajoute ce signal de bruit au signal utile avant de l'envoyer au dispositif B.

Le signal envoyé par A est reçu par le dispositif B au cours d'une étape 202.

Ensuite, au cours d'une étape 204 d'analyse, le dispositif B extrait des paramètres de bruit. Par exemple, il filtre le signal reçu, notamment à l'aide du filtre coupe-bande 38 s'il est implémenté, pour fournir un signal de bruit et en extrait de façon classique des paramètres statistiques, spectraux et/ou d'amplitude à l'aide des moyens 40, de la même façon que lors de la phase de calibration.

Au cours d'une étape 206, le dispositif récepteur B compare le ou les paramètres de bruit extraits avec le ou les paramètres de bruit de référence correspondants stockés en mémoire. Bien sûr, dans le cas où le signal utile a été émis avec le bruit prédéterminé connu de B, la comparaison, par le dispositif récepteur B, du ou des paramètres de bruit extraits avec le ou les paramètres de bruit de référence comporte la prise en compte du ou des paramètres de bruit prédéterminés connus de B.

Ensuite, au cours d'une étape de test 208, le dispositif récepteur B teste, selon le résultat de la comparaison précédente, si les paramètres comparés doivent être considérés comme identiques ou différents.

Si les paramètres comparés sont considérés comme différents, c'est-à-dire si l'on peut considérer qu'il y a une variation des caractéristiques de bruit par rapport à la phase de calibration, on passe à une étape 210 de prise de décision positive concluant à la présence d'un dispositif relais R entre les deux dispositifs communicants A et B. Sinon on passe à une étape 212.

Si l'on considère qu'une seule comparaison aboutissant à une identité entre les paramètres comparés n'est pas suffisante pour conclure à l'absence d'un dispositif relais entre les deux dispositifs communicants A et B, mais que x comparaisons aboutissant au même résultat doivent être successivement réalisées, l'étape 212 consiste à imposer de revenir à l'étape 206 tant que ce nombre x de comparaisons n'est pas atteint.

Enfin, lorsque le nombre x de comparaisons aboutissant toutes à une identité entre les paramètres comparés est atteint, on passe à une étape 214 de prise de décision négative concluant à l'absence d'un dispositif relais R entre les deux dispositifs communicants A et B.

Cette exigence de x comparaisons aboutissant toutes à une identité entre les paramètres comparés pour prendre une décision négative alors qu'une seule comparaison aboutissant à une différence des paramètres comparés suffit pour prendre une décision positive vise à limiter le risque de « faux négatifs », c'est-à-dire de décisions négatives prises (décisions concluant à l'absence de relais) alors qu'un dispositif relais R est pourtant bien présent entre A et B. En effet, un « faux positif », c'est-à-dire une décision positive prise (décisions concluant à la présence de relais) alors qu'un dispositif relais R n'est pas présent entre A et B, est moins lourde de conséquences qu'un faux négatif. Autrement dit, l'ajout de comparaisons permet de renforcer la sécurité.

De façon optionnelle, le nombre x de comparaisons à faire avant de passer à l'étape 214 de décision négative peut être fonction du nombre N de caractérisations du bruit de référence réalisées en phase de calibration.

Une autre façon complémentaire de réduire le risque de faux positifs et négatifs consiste à prévoir, au cours de l'étape de test 208, un test d'hypothèse permettant au dispositif récepteur B de fixer des seuils de rejet d'hypothèses (hypothèse d'absence ou de présence d'un dispositif relais) en utilisant, par exemple, le test connu de l'homme du métier dit test de Fisher ou bien en fonction de probabilités de faux positifs et négatifs visés. Le test de Fisher est notamment décrit en détail dans le document de M.G. Kendall, A. Stuart, J.K. Ord, intitulé « Kendall's advanced theory of statistics », Hodder Arnold Publication, juin 1994.

A titre d'exemple simple et concret, purement illustratif et non limitatif, la détection peut se baser sur l'analyse d'un paramètre de variance du bruit reçu par le dispositif récepteur B. Le paramètre de bruit de référence est alors une valeur $\sigma_0^2$ de variance calculée lors de la phase de calibration. Une statistique $S^2$ d'estimation de la variance $\sigma^2$ du bruit filtré à l'étape 204 obtenue sur n échantillons peut être utilisée :

$$S^2 = \sum_{i=1}^{n} \frac{\left(X_i - \overline{X}\right)^2}{n-1}.$$

En supposant que le bruit est blanc, gaussien et de moyenne nulle, la statistique de test $S^2$ est une variable aléatoire de $\chi^2$ centrée de degré de liberté n-1 vérifiant l'approximation suivante :

$$\frac{(n-1)S^2}{\sigma^2} \approx \chi^2_{(n-1)}.$$

Ainsi, une règle de décision peut consister en :

Si $S^2 \in [a,b]$, alors on en conclut l'absence de relais, et

Si $S^2 \notin [a,b]$, alors on en conclut la présence de relais,

où les paramètres a et b sont déterminés en fonction d'une probabilité critique a visée de faux positifs et négatifs.

Plus précisément :

$$\alpha = P\left[S^2 \notin [a,b], \quad quand \quad \sigma^2 = {\sigma_0}^2\right],$$

$$= P\left[\frac{(n-1)S^2}{{\sigma_0}^2} \notin [\frac{(n-1)a}{{\sigma_0}^2}, \frac{(n-1)b}{{\sigma_0}^2}]\right],$$

$$= P\left[\chi^2_{(n-1)} \notin [\frac{(n-1)a}{{\sigma_0}^2}, \frac{(n-1)b}{{\sigma_0}^2}]\right].$$

Les bornes de cet intervalle peuvent être obtenues à partir des équations suivantes :

$$\frac{\alpha}{2} = P\left[\chi^2_{(n-1)} < \frac{(n-1)a}{{\sigma_0}^2}\right] \text{ et } \frac{\alpha}{2} = P\left[\chi^2_{(n-1)} > \frac{(n-1)b}{{\sigma_0}^2}\right].$$

En effet, la variable a étant fixée a priori, il est simple d'en déduire les valeurs de a et b.

Par conséquent, le principe du test effectué à l'étape 208 peut, dans cet exemple simple, comporter les étapes suivantes :

- détermination de $S^2$ sur n échantillons,
- comparaison de la valeur obtenue avec l'intervalle [a,b],
- conclusions sur l'identité ou la différence des paramètres comparés.

Par réciprocité et de façon optionnelle, dans une application de communication bidirectionnelle, le dispositif A pourrait lui aussi, en tant que récepteur vis-à-vis de B, exécuter les mêmes étapes 202 à 214 de cette phase de communication.

Il apparaît clairement qu'un procédé de sécurisation d'une communication sans fil tel que celui décrit précédemment est simple à mettre en oeuvre donc économique en termes de coûts d'implémentation dans un système de communication. Notamment, il n'exige aucun ajout technologique particulier, tel qu'une antenne directive ou l'utilisation d'horloges synchronisées entre elles, sur les dispositifs d'émission/réception en jeu. En outre il ne nécessite pas l'utilisation de protocoles cryptographiques pour sa mise en oeuvre.

Il n'est dépendant ni d'une norme ni d'un protocole de haut niveau puisqu'il tire profit de caractéristiques des signaux transmis pouvant être extraites au niveau de la couche physique du modèle OSI. Il s'adapte ainsi à tout type de réseau sans fil ou sans contact : les réseaux sans fil classiques de téléphonie mobile, les réseaux sans fil de type ad hoc, les réseaux de capteurs, les systèmes sans contact RFID ou NFC, les réseaux véhiculaires, etc.

Enfin, il est facilement ajustable pour chaque application envisageable, qu'elle soit militaire, de surveillance, d'authentification ou autre.

On notera par ailleurs que l'invention n'est pas limitée aux modes de réalisation décrits précédemment. Il apparaîtra en effet à l'homme de l'art que diverses modifications peuvent être apportées aux modes de réalisation décrits ci-dessus, à la lumière de l'enseignement qui vient de lui être divulgué. Dans les revendications qui suivent, les termes utilisés ne doivent pas être interprétés comme limitant les revendications aux modes de réalisation exposés dans la présente description, mais doivent être interprétés pour y inclure tous les équivalents que les revendications visent à couvrir du fait de leur formulation et dont la prévision est à la portée de l'homme de l'art en appliquant ses connaissances générales à la mise en oeuvre de l'enseignement qui vient de lui être divulgué.

**Revendications**

1. Procédé de sécurisation d'une communication sans fil entre un dispositif émetteur (A) et un dispositif récepteur (B ; 30), comportant les étapes suivantes :

   - réception (202) d'un signal par le dispositif récepteur (B ; 30),
   - extraction (204) par le dispositif récepteur (B ; 30) d'au moins un paramètre de bruit de ce signal reçu,
   - comparaison (206) du paramètre de bruit extrait avec au moins un paramètre de bruit de référence correspondant stocké en mémoire (34) dans le dispositif récepteur (B ; 30),
   - décision (208, 210, 212, 214) sur la présence ou l'absence d'un dispositif relais (R) entre le dispositif émetteur (A) et le dispositif récepteur (B ; 30) en fonction du résultat de cette comparaison (206), **caractérisé en ce qu'**il comporte en outre une calibration préalable du dispositif récepteur (B ; 30) au cours de laquelle :
   - le dispositif récepteur (B ; 30) reçoit (102) un signal résultant d'une communication directe avec le dispositif émetteur (A) sans intervention de dispositif relais,
   - le dispositif récepteur (B ; 30) extrait (104) au moins un paramètre de bruit du signal reçu, et
   - le dispositif récepteur (B ; 30) stocke (108) en mémoire (34) ce paramètre de bruit en tant que paramètre de bruit de référence caractéristique d'une communication directe sans dispositif relais entre le dispositif émetteur (A) et le dispositif récepteur (B ; 30).

2. Procédé de sécurisation d'une communication sans fil selon la revendication 1, comportant préalablement les étapes suivantes :

   - génération (200), par le dispositif émetteur (A), d'un bruit prédéterminé à partir d'au moins un paramètre de bruit prédéterminé connu du dispositif émetteur (A) et du dispositif récepteur (B ; 30), et
   - émission (200) d'un signal comportant le bruit prédéterminé,

   et dans lequel la comparaison (206), par le dispositif récepteur (B ; 30), du paramètre de bruit extrait avec le paramètre de bruit de référence comporte la prise en compte du paramètre de bruit prédéterminé connu du dispositif émetteur (A) et du dispositif récepteur (B ; 30).

3. Procédé de sécurisation d'une communication sans fil selon l'une quelconque des revendications 1 ou 2, dans lequel le paramètre de bruit extrait et le paramètre de bruit de référence comportent chacun un paramètre d'estimation de variance de bruit.

4. Procédé de sécurisation d'une communication sans fil selon l'une quelconque des revendications 1 à 3, dans lequel la décision (208, 210, 212, 214) sur la présence ou l'absence d'un dispositif relais (R) comporte une étape de test (208) basée sur le test d'une hypothèse de présence ou d'absence de dispositif relais (R) confrontée à des seuils de rejet de cette hypothèse calculés en fonction du test de Fisher ou de probabilités prédéterminées de faux positifs et/ou négatifs visés.

5. Dispositif récepteur (B ; 30) de signaux engendrés par une communication sans fil entre un dispositif émetteur (A) prédéterminé et ce dispositif récepteur, comportant :

   - des moyens de calibration par réception (102) d'un signal résultant d'une communication directe avec le dispositif émetteur (A) sans intervention de dispositif relais et par extraction (104) d'au moins un paramètre de bruit du signal reçu en tant que paramètre de bruit de référence caractéristique d'une communication directe sans dispositif relais entre le dispositif émetteur (A) et le dispositif récepteur (B ; 30),
   - des moyens (34) de stockage de ce paramètre de bruit de référence,
   - des moyens (36) d'extraction d'au moins un paramètre de bruit d'un signal reçu,
   - des moyens (42) de comparaison du paramètre de bruit extrait avec le paramètre de bruit de référence,
   - des moyens (44) de détection de la présence ou de l'absence d'un dispositif relais (R) entre le dispositif émetteur prédéterminé (A) et le dispositif récepteur (B ; 30) en fonction du résultat de cette comparaison.

6. Dispositif récepteur (B ; 30) selon la revendication 5, comportant en outre des moyens (34) de stockage d'au moins un paramètre de bruit prédéterminé connu également du dispositif émetteur prédéterminé (A) et dans lequel les moyens de comparaison (42) sont conçus pour prendre en compte ce paramètre de bruit prédéterminé.

7. Dispositif récepteur (B ; 30) selon la revendication 5 ou 6, dans lequel les moyens d'extraction (36) comportent :

- un filtre coupe-bande (38) destiné à être appliqué au signal reçu pour la fourniture d'un signal de bruit filtré et dont les fréquences de coupure sont définies en fonction d'une bande passante utile présupposée du signal reçu, et

- des moyens (40) d'estimation d'au moins un paramètre statistique, spectral et/ou d'amplitude du signal de bruit filtré.

8. Système sécurisé de communication sans fil comportant au moins un dispositif récepteur (B ; 30) et au moins un dispositif émetteur (A), dans lequel chaque dispositif récepteur (B ; 30) est un dispositif selon l'une quelconque des revendications 5 à 7.

9. Système sécurisé de communication selon la revendication 8, dans lequel chaque dispositif émetteur (A), respectivement récepteur (B), est également un dispositif récepteur, respectivement émetteur.

**Patentansprüche**

1. Verfahren zur Sicherung einer drahtlosen Kommunikation zwischen einer Sendervorrichtung (A) und einer Empfängervorrichtung (B; 30), das die folgenden Schritte umfasst:

   - Empfangen (202) eines Signals durch die Empfängervorrichtung (B; 30),
   - Extrahieren (202) wenigstens eines Rauschparameters aus dem empfangenen Signal durch die Empfängervorrichtung (B; 0),
   - Vergleichen (206) des extrahierten Rauschparameters mit wenigstens einem entsprechenden Bezugsparameter für das Rauschen, der in dem Speicher (34) in der Empfängervorrichtung (B; 30) gespeichert ist,
   - Entscheiden (208, 210, 212, 214) über das Vorhandensein oder Nichtvorhandensein einer Zwischenstation (R) zwischen der Sendervorrichtung (A) und der Empfängervorrichtung (B; 30) in Abhängigkeit von dem Ergebnis dieses Vergleichs (206),
   **dadurch gekennzeichnet, dass** es außerdem eine vorhergehende Eichung der Empfängervorrichtung (B; 30) umfasst, in deren Verlauf:
   - die Empfängervorrichtung (B; 30) ein Signal empfängt (102), das sich aus einer direkten Kommunikation mit der Sendervorrichtung (A) ohne Eingreifen der Zwischenstation ergibt,
   - die Empfängervorrichtung (B; 30) wenigstens einen Rauschparameter des empfangenen Signals extrahiert (104), und
   - die Empfängervorrichtung (B; 30) diesen Rauschparameter als Bezugsparameter für das Rauschen, der charakteristisch für eine direkte Kommunikation ohne Zwischenstation zwischen der Sendervorrichtung (A) und der Empfängervorrichtung (B; 30) ist, im Speicher (34) speichert (108).

2. Verfahren zur Sicherung einer drahtlosen Kommunikation nach Anspruch 1, das vorher die folgenden Schritte umfasst:

   - Erzeugen (200) eines vorgegebenen Rauschens aus wenigstens einem vorgegebenen bekannten Rauschparameter der Sendervorrichtung (A) und der Empfängervorrichtung (B; 30) durch die Sendervorrichtung (A), und
   - Senden (200) eines Signals, welches das vorgegebene Rauschen umfasst,

   und wobei der Vergleich (206) des extrahierten Rauschparameters mit dem Bezugsparameter für das Rauschen die Berücksichtigung des vorgegebenen bekannten Rauschparameters der Sendervorrichtung (A) und der Empfängervorrichtung (B; 30) umfasst.

3. Verfahren zur Sicherung einer drahtlosen Kommunikation nach einem der Ansprüche 1 oder 2, wobei der extrahierte Rauschparameter und der Bezugsparameter für das Rauschen jeweils einen Schätzparameter für die Varianz des Rauschens umfassen.

4. Verfahren zur Sicherung einer drahtlosen Kommunikation nach einem der Ansprüche 1 bis 3, wobei die Entscheidung (208, 210, 212, 214) über das Vorhandensein oder Nichtvorhandensein einer Zwischenstation (R) einen Prüfschritt (208) umfasst, der auf einer Prüfung einer Annahme über das Vorhandensein oder Nichtvorhandensein der Zwischenstation (R) durch eine Gegenüberstellung mit Zurückweisungsschwellen für diese Annahme basiert, welche als Funktion des Fisher-Tests oder vorgegebener Wahrscheinlichkeiten für falsche Positive und/oder vermutete Negative berechnet werden.

**5.** Empfängervorrichtung (B; 30) für Signale, die durch eine drahtlose Kommunikation zwischen einer vorgegebenen Sendervorrichtung (A) und dieser Empfängervorrichtung erzeugt werden, die umfasst:

- Mittel für die Eichung durch den Empfang (102) eines Signals, das sich aus einer direkten Kommunikation mit der Sendervorrichtung (A) ohne Eingreifen der Zwischenstation ergibt, und durch die Extraktion (104) wenigstens eines Rauschparameters des empfangenen Signals als Bezugsparameter für das Rauschen, der charakteristisch für eine direkte Kommunikation ohne Zwischenstation zwischen der Sendervorrichtung (A) und der Empfängervorrichtung (B; 30) ist,
- Mittel (34) zum Speichern dieses Bezugsparameters für das Rauschen,
- Mittel (36) für die Extraktion wenigstens eines Rauschparameters aus einem empfangenen Signal,
- Mittel (42) zum Vergleichen des extrahierten Rauschparameters mit dem Bezugsparameter für das Rauschen,
- Mittel (44) für den Nachweis des Vorhandenseins oder Nichtvorhandenseins einer Zwischenstation (R) zwischen der vorgegebenen Sendervorrichtung (A) und der Empfängervorrichtung (B; 30) in Abhängigkeit von dem Ergebnis dieses Vergleichs.

**6.** Empfängervorrichtung (B; 30) nach Anspruch 5, die außerdem Mittel (34) zum Speichern wenigstens eines vorgegebenen ebenfalls bekannten Rauschparameters der vorgegebenen Sendervorrichtung (A) umfasst, und in welcher die Vergleichsmittel (42) entwickelt sind, um diesen vorgegebenen Rauschparameter zu berücksichtigen.

**7.** Empfängervorrichtung (B; 30) nach Anspruch 5 oder 6, wobei die Extraktionsmittel (36) umfassen:

- ein Bandsperrfilter (38), das dafür bestimmt ist, auf ein empfangenes Signal angewendet zu werden, um ein gefiltertes Rauschsignal zu liefern, und dessen Grenzfrequenzen in Abhängigkeit einer nutzbaren Durchlassbandbreite definiert sind, welche Voraussetzung für das empfangene Signal ist,
- Mittel (40) zum Schätzen wenigstens eines statistischen, spektralen und/oder Amplitudenparameters des gefilterten Rauschsignals.

**8.** System zur Sicherung einer drahtlosen Kommunikation, das wenigstens eine Empfängervorrichtung (B; 30) und wenigstens eine Sendervorrichtung (A) umfasst, wobei jede Empfängervorrichtung eine Vorrichtung nach einem der Ansprüche 5 bis 7 ist.

**9.** System zur Sicherung einer drahtlosen Kommunikation nach Anspruch 8, wobei jede Sendervorrichtung (A) bzw. Empfängervorrichtung (B) auch eine Empfängervorrichtung bzw. Sendervorrichtung ist.

**Claims**

**1.** Method for securing a wireless communication between a transmitter device (A) and a receiver device (B; 30), comprising the following steps:

- reception (202) of a signal by the receiver device (B; 30),
- extraction (204) by the receiver device (B; 30) of at least one noise parameter of this signal received,
- comparison (206) of the extracted noise parameter with at least one corresponding reference noise parameter stored in the memory (34) in the receiver device (B; 30),
- decision (208, 210, 212, 214) on the presence or the absence of a relay device (R) between the transmitter device (A) and the receiver device (B; 30) according to the result of this comparison (206), **characterized in that** it further comprises a preliminary calibration of the receiver device (B; 30) wherein:
- the receiver device (B; 30) receives (102) a signal resulting from a direct communication with the transmitter device (A) without the intervention of a relay device,
- the receiver device (B; 30) extracts (104) at least one noise parameter from the signal received, and
- the receiver device (B; 30) stores (108) this noise parameter in the memory (34), as a reference noise parameter characteristic of a direct communication without a relay device between the transmitter (A) device and the receiver device (B; 30).

**2.** Method for securing a wireless communication according to claim 1, first comprising the following steps:

- generation (200), by the transmitter device (A), of a predetermined noise based on at least one predetermined noise parameter known to the transmitter device (A) and the receiver device (B; 30), and
- transmission (200) of a signal comprising the predetermined noise, and wherein the comparison (206), by the receiver device (B; 30), of the extracted noise parameter with the reference noise parameter comprises the consideration of the predetermined noise parameter known to the transmitter device (A) and the receiver device (B; 30).

3. Method for securing a wireless communication according to either one of claims 1 or 2, wherein the extracted noise parameter and the reference noise parameter each comprise a noise variance estimation parameter.

4. Method for securing a wireless communication according to any one of claims 1 to 3, wherein the decision (208, 210, 212, 214) about the presence or the absence of a relay device (R) comprises a test step (208) based on the test of a hypothesis of the presence or absence of a relay device (R) checked against the rejection thresholds of this hypothesis computed according to the Fisher test or predetermined probabilities of the false positives and/or negatives targeted.

5. Receiver device (B; 30) for receiving signals generated by a wireless communication between a predetermined transmitter device (A) and this receiver device, comprising:

- means for calibration by reception (102) of a signal resulting from a direct communication with the transmitter device (A) without the intervention of a relay device and by extraction (104) of at least one noise parameter from the signal received as a reference noise parameter characteristic of a direct communication without a relay device between the transmitter device (A) and the receiver device (B; 30),
- means (34) for storing this reference noise parameter,
- means (36) for extracting at least one noise parameter from a signal received,
- means (42) for comparing the extracted noise parameter with the reference noise parameter,
- means (44) for detecting the presence or the absence of a relay device (R) between the predetermined transmitter device (A) and the receiver device (B; 30) according to the result of this comparison.

6. Receiver device (B; 30) according to claim 5, further comprising means (34) for storing at least one predetermined noise parameter also known to the predetermined transmitter device (A) and wherein the comparison means (42) are designed to take this predetermined noise parameter into account.

7. Receiver device (B; 30) according to claim 5 or 6, wherein the extraction means (36) comprise:

- a band-stop filter (38) intended to be applied to the signal received in order to provide a filtered noise signal and of which the cut-off frequencies are defined according to an assumed useful bandwidth of the signal received, and
- means (40) for estimating at least one statistical, spectral and/or amplitude parameter of the filtered noise signal.

8. Secure wireless communication system comprising at least one receiver device (B; 30) and at least one transmitter device (A), wherein each receiver device (B; 30) is a device according to any one of claims 5 to 7.

9. Secure wireless communication system according to claim 8, wherein each transmitter device (A) or receiver device (B), respectively, is also a receiver device or a transmitter device, respectively.

# Fig. 1A

# Fig. 1B

## Fig. 2A

## Fig. 2B

## Fig. 2C

## Fig. 2D

## Fig.3

d(A,R1)= 1 cm
d(A,R1)= 2 cm
d(A,R1)= 3 cm
d(A,R1)= 4 cm
d(A,R1)= 5 cm
d(B,R2)= 1 cm
d(B,R2)= 2 cm
d(B,R2)= 3 cm
d(B,R2)= 4 cm
d(B,R2)= 5 cm

d(A,B)= 1 cm
d(A,B)= 2 cm
d(A,B)= 3 cm
d(A,B)= 4 cm
d(A,B)= 5 cm
d(A,B)= 6 cm
d(A,B)= 7 cm

## Fig.4

Fig. 5

Fig. 6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2004114227 A
- US 20060255909 A1